# EUROPEAN PATENT SPECIFICATION

(11) **EP 3 152 338 B1**
(45) Date of publication and mention of the grant of the patent: **15.08.2018**
(21) Application number: 15731385.9
(22) Date of filing: 04.06.2015
(51) Int. Cl.: C22B 3/26, C22B 3/00, C22B 11/00

(54) **GOLD SOLVENT EXTRACTION**
GOLDEXTRAKTION MITTELS LÖSUNGSMITTEL
EXTRACTION D'OR PAR SOLVANT

(30) Priority: 05.06.2014 FI 20145517
(43) Date of publication of application: 12.04.2017
(73) Proprietor: Outotec (Finland) Oy, 02230 Espoo (FI)
(72) Inventor: HAAPALAINEN, Mika, FI-28430 Pori (FI); KARONEN, Janne, FI-32800 Kokemäki (FI)
(74) Representative: Seppo Laine Oy
(86) International application number: PCT/FI2015/050385
(87) International publication number: WO 2015/185803

(56) References cited:
- WO-A1-2011/154603
- RU-C- 1 741 436

## Description

### FIELD OF THE INVENTION

The present invention relates to recovery of gold, in particular to a method of extracting gold from pregnant leach solution (PLS) obtained from gold leaching.

### BACKGROUND OF THE INVENTION

WO 2011154603 A1 discloses a method for recovering gold by solvent extraction wherein gold is extracted from a pregnant leach solution by an organic extractant, which is a blend of two components: an organic diester and an organic long-chain alcohol. In this method gold loaded into organic phase is preferably scrubbed by a 2 to 6 M HCl solution to reject impurities and then stripped by a stripping solution to recover gold into aqueous phase. From the stripping solution gold is reduced into solid form by using a reducing agent. One of the disadvantages associated with the above method is that with this method scrubbing acid must be at least 3M HCl, preferably 5M HCl, to minimize Au loss and maximize scrubbing result. In scrubbing some acid is co-extracted into organic. Acid is then stripped in the first stripping stage increasing acidity and hindering stripping efficiency of gold. Furthermore, stripped acid is lost in gold recovery.

### BRIEF DESCRIPTION OF THE INVENTION

An object of the present invention is thus to provide a method and an apparatus for implementing the method so as to overcome the above problems. The objects of the invention are achieved by a method which is characterized by what is stated in the independent claims. The preferred embodiments of the invention are disclosed in the dependent claims.

The invention is based on the idea of maximally concentrating gold into stripping solution as pure as possible before reducing it into solid state. Concentrating of gold is achieved by re-extracting stripped gold once or twice according to the method of the invention.

An advantage of the method of the invention is that scrubbing of organic phase with concentrated HCl can be avoided. Further, the total HCl usage is much lower than in a typical process comprising one scrubbing stage. Finally, the total volume of concentrated gold solution is rather small having a positive effect on the size and efficiency of the gold recovery stage with reduced cost.

### BRIEF DESCRIPTION OF THE DRAWINGS

In the following the invention will be described in greater detail by means of preferred embodiments with reference to the attached [accompanying] drawings, in which
Figure 1 shows a process flow of an embodiment of the present invention;
Figure 2 shows the effect of PLS acidity and chloride content for gold extraction efficiency;
Figure 3 shows the gold extraction efficiency of OT-307 with PLS having a chloride content of 131g/L and acidity of 10 g/L.

### DETAILED DESCRIPTION OF THE INVENTION

The present invention provides a method of extracting gold from pregnant leach solution (PLS) obtained from leaching of gold, comprising the steps of:
(a) extracting the PLS with an organic extractant comprising an organic diester and an organic long-chain alcohol to obtain a first organic phase comprising gold;
(b) stripping gold from the first organic phase with a first water solution to obtain a first aqueous raffinate comprising gold and a first depleted organic phase;
(c) adding HCl and NaCl into the first aqueous raffinate to increase its acid content to at least 8 g/L and chloride content to at least 30 g/L to obtain a first aqueous solution comprising gold;
(d) extracting the first aqueous solution with an organic extractant comprising an organic diester and an organic long-chain alcohol to obtain a second organic phase comprising gold;
(e) stripping gold from the second organic phase with a second water solution to obtain a second aqueous raffinate comprising gold and a second depleted organic phase;
(f) optionally repeating steps (c) to (e) one or more times to obtain a final aqueous raffinate comprising gold.

Repetition of the extraction-stripping stages concentrates gold in the final aqueous raffinate. If all extraction stages use global O/A=1:3 and stripping stage global O/A=3:1 the gold concentration factor could be as high as 590-fold.

Gold can be recovered from the final aqueous raffinate by any suitable method known to a person skilled in the art e.g.by a reducing agent or by absorbing gold into activated carbon. Gold can recovered for instance by reduction with oxalic acid or sodium oxalate or mixture of the two. Gold can also be reduced from the final aqueous raffinate by means of electrolysis.

The method of the present invention is particularly suitable for pregnant leach solutions (PLS) obtained from leach of gold such as a gold comprising acidic chloride-based aqueous solution or solid-containing slurry. The PLS may be obtained by leaching gold ore, concentrate or some other gold-bearing solid material such as anode slime, ash, scrap or ion-exchange material, activated carbon or adsorbent used in gold recovery.

Extraction in step (a) is conducted in one or more stages, preferably in at least two stages, typically in two to three stages.

Step (b) is performed directly after step (a), i.e. no scrubbing, e.g. by an aqueous hydrochloric acid solution, is performed between the extraction and stripping steps. This also applies to any further steps (d) and (e).

The stripping solution in step (b), i.e. first water solution, and any further step (e), i.e. second (or further) water solution, preferably comprises NaCl to enhance phase separation and to give some chloride content for the next extraction stages. The first water solution comprises from 0 to 100 g/L NaCl, preferably from 1 to 80 g/L NaCl, more preferably from 10 to 50 g/L NaCl. The second (or further) water solution comprises from 0 to 100 g/L NaCl, preferably, from 1 to 80 g/L NaCl, more preferably from 10 to 50 g/L NaCl. Step (b) is conducted in one or more, preferably at least two, more preferably from two to four, stages.

In any step (c) HCl and NaCl is added into the aqueous raffinate to increase its acid content to at least 8 g/L, preferably to from 10 g/L to 20 g/L, and chloride content to at least 30 g/L, preferably to from 40 g/L to 60 g/L.

The acidified solution is then fed into the next extraction step (d) where preferably the same organic extractant as in step (a) is utilized. Extraction in step (d) is conducted in one or more stages, The number of extraction stages in step (d) is preferably at least two, more typically from two to three, to maintain good gold recovery from the aqueous solution introduced into this step having lower chloride content that the original PLS.

The organic extractant utilized in extraction steps (a) and (d) is typically a mixture of a diester of an organic diol and a branched long-chain alcohol such as a gold extraction regent disclosed in WO2011/154603. Preferably the organic extractant is a mixture of 2,2,4-trialkyl-1,3-pentanediol and a branched C₆₋₁₂-alcohol, in particular a mixture of 2,2,4-trimethyl-1,3-pentanediol di-isobutyrate and 2-ethylheksanol (OT-307).

Optional repetition of steps (c) to (e) increases gold content of the final stripping solution and improves the economics of the gold recovery stage. Preferably steps (c) to (e) are repeated at least once, typically once or twice. The second aqueous raffinate obtained in first step (e) to the repeated step (d) also needs HCI and NaCl addition in step (c) to same level as the first aqueous raffinate obtained in step (b). The volume flow of the second aqueous raffinate into the repeated steps (c) to (e) is typically only about 1.5% of the original PLS flow. The volume of the final aqueous raffinate can be as low as 0.17% of the original PLS flow. Preferably the volume of the final aqueous raffinate is from 0.06 to 3% of the original PLS flow.

Preferably all extraction and stripping stages are connected as counter-current flows.

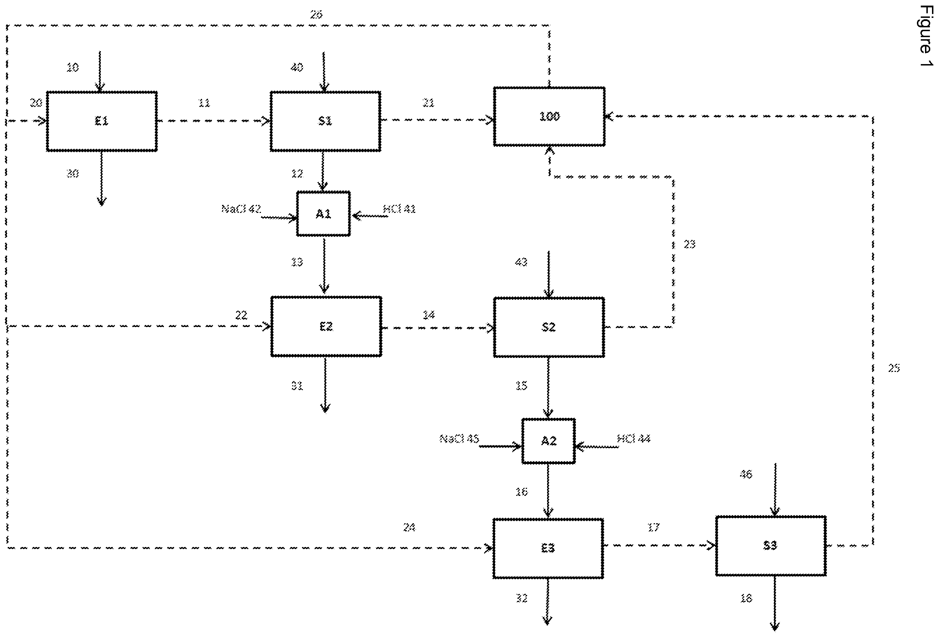

Figure 1 shows a process flow of the method of the present invention. Referring to Figure 1, Pregnant leach solution 10 obtained from leaching of gold containing material is entered into a first extraction step (a) E1 wherein it is extracted in two to three stages with OT-307 20. A first organic phase comprising gold 11 and a first depleted solution 30 are obtained. The first organic phase 11 is then introduced into a first stripping step (b) S1 wherein it is stripped in 3 to 4 stages with a first water solution 40 comprising 10 g/L NaCl. A first aqueous raffinate comprising gold 12 and a first depleted organic phase 21 are obtained.

HCl 41 and NaCl 42 are then added to the first aqueous raffinate in a first addition step (c) A1 to increase its acid content to at least 8 g/L and chloride content to at least 30 g/L to obtain a first aqueous solution comprising gold 13.

The first aqueous solution 13 is the entered into a second extraction step (d) E2 wherein it is extracted three times with OT-307 22. A second organic phase comprising gold 14 and a second depleted solution 31 are obtained. The second organic phase 14 is then introduced into a second stripping step (e) S2 wherein it is stripped in 3 to 4 stages with a second water solution 43 comprising 10 g/L NaCl. A second aqueous raffinate comprising gold 15 and a second depleted organic phase 23 are obtained.

HCl 44 and NaCl 45 are then added to the second aqueous raffinate 15 in a second addition step (c) A2 to increase its acid content to at least 8 g/L and chloride content to at least 30 g/L to obtain a second aqueous solution comprising gold 16.

The second aqueous solution 16 is the entered into a third extraction step (d2) E3 wherein it is extracted three times with OT-307 24. A third organic phase comprising gold 17 and a third depleted solution 32 are obtained. The third organic phase 17 is then introduced into a third stripping step (e2) S3 wherein it is stripped in 3 to 4 stages with a third water solution 46 comprising 10 g/L NaCl. A final aqueous raffinate 18 comprising gold Strip3 and a third depleted organic phase 25 are obtained and the final aqueous raffinate 18 is introduced into a gold recovery step wherein gold is recovered from the final aqueous raffinate. The depleted organic phases 21, 23, 25 can be combined e.g. in an organic tank 100 and recirculated 26 to the gold extraction steps (a) and/or (d) E1, .. E3.

### EXAMPLES

### Example 1

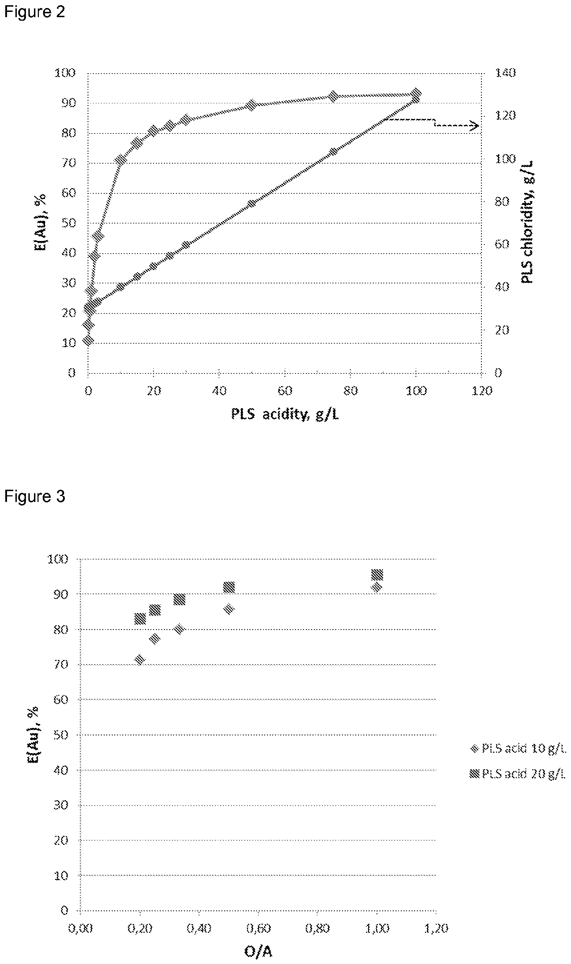

Laboratory extraction tests were conducted to test effect of PLS acidity to extraction efficiency of gold with extraction agent OT-307. Synthetic PLS solution was prepared and it contained 10 mg/L Au and 50 g/L NaCl. For each test acid concentration of PLS was adjusted by HCl. PLS acidity varied from 0.1 g/L to 100 g/L. Each aqueous and organic phase were shaken together 15 minutes in room temperature with using O/A=1:1. Phases were separated and gold content of each raffinate was analysed. Gold extraction efficiency of each test point can be seen in Figure 2. The gold extraction efficiency rapidly increased as acidity increased being at level 71% with concentration of 10 g/L of acid and 40 g/L chloride.

### Example 2

Laboratory extraction tests were conducted to test effect of higher chloride content to extraction efficiency of gold with extraction agent OT-307. Synthetic PLS solution was prepared and it contained 50 mg/L Au and 10 g/L HCl and 200 g/L NaCl. Therefore the chloride content was 131 g/L. Five different O/A-ratios were used. Each aqueous and organic phase were shaken together 15 minutes in room temperature. Phases were separated and gold content of each raffinate was analysed. Gold extraction efficiency of each test point can be seen in Figure 3. The gold extraction efficiency is about 92% (O/A=1:1) with chloride concentration of 131 g/L.

### Example 3

Laboratory extraction tests were conducted to study how high gold concentration will increase in second aqueous raffinate after stripping organic phase obtained from second extraction step. OT-307 was extraction agent in both extraction-stripping sequences. Synthetic PLS was prepared and it contained 30.1 mg/L Au, 10 g/L HCl, 214 g/L Cl-, 15 g/L Br- and some typical impurity metals Cu, Ca, Fe(III) and Zn. PLS and organic phases with using phase ratio O/A=1:4 were shaken together 5 minutes in room temperature. Phases were separated and raffinate was analyzed. About 80% of gold was extracted loading organic to value 96.4 mg/L Au. Loaded organic was then stripped by aqueous solution containing 10 g/L NaCl using phase ratio of O/A=3:1. Received first aqueous stripping raffinate contained 259 mg/L Au. About 90% of loaded gold was stripped. HCI was added in the first aqueous stripping raffinate to increase acid concentration to value 34 g/L as well as chloride concentration to value 40 g/L. Fresh organic phase was introduced and using phase ratio of O/A=1:2 phases were shaken together 5 minutes in room temperature. Phases were separated and this second raffinate was analyzed. About 55% of gold was extracted in one step loading second organic to value 255 mg/L Au. This second loaded organic was stripped by aqueous solution containing 10 g/L NaCl using phase ratio of O/A=2:1. Received second aqueous stripping raffinate contained 323 mg/L Au. About 64% of loaded gold was stripped in one stripping step.

Composition of each aqueous solution are shown in Table 1. From this table can be seen how gold concentration increases while impurities concentration as well as solution volume decreases. Increasing extraction and stripping counter-current steps in second extraction-stripping sequence would further increase gold concentration in the final raffinate.

**Table 1**

| | Solution volume mL | Au mg/L | Ca mg/L | Cu mg/L | Fe mg/L | Zn mg/L |
|---|---|---|---|---|---|---|
| PLS | 1600 | 30.1 | 67300 | 75900 | 186 | 432 |
| 1. raffinate | 133 | 259 | 26 | 310 | 47 | 9.7 |
| 2. raffinate | 73 | 323 | <1 | 6.3 | 1 | <0.5 |

It will be obvious to a person skilled in the art that, as the technology advances, the inventive concept can be implemented in various ways. The invention and its embodiments are not limited to the examples described above but may vary within the scope of the claims.

## Claims

1. A method of extracting gold from pregnant leach solution (PLS) obtained from leaching of gold, comprising the steps of:
(a) extracting the PLS with an organic extractant comprising an organic diester and an organic long-chain alcohol to obtain a first organic phase comprising gold;
(b) stripping gold from the first organic phase with a first water solution to obtain a first aqueous raffinate comprising gold and a first depleted organic phase;
(c) adding HCI and NaCl into the first aqueous raffinate to increase its acid content to at least 8 g/L and chloride content to at least 30 g/L to obtain a first aqueous solution comprising gold;
(d) extracting the first aqueous solution with an organic extractant comprising an organic diester and an organic long-chain alcohol to obtain a second organic phase comprising gold;
(e) stripping gold from the second organic phase with a second water solution to obtain a second aqueous raffinate comprising gold and a second depleted organic phase;
(f) optionally repeating steps (c) to (e) one or more times to obtain a final aqueous raffinate comprising gold.

2. The method as claimed in claim 1, wherein step (a) is performed in one or more, preferably at least two, more preferably from two to three, stages.

3. The method as claimed in claim 1 or 2, wherein step (b) is performed in one or more, preferably at least two, more preferably from two to four, stages.

4. The method as claimed in any one of claims 1 to 3, wherein in extraction step (d) the same organic extractant is utilized as in step (a).

5. The method as claimed in any one of claims 1 to 4, wherein steps (c) to (e) are repeated at least once.

6. The method as claimed in any one of claims 1 to 5, wherein all extraction and stripping stages are connected as counter-current flows.

7. The method as claimed in any one of claims 1 to 6, wherein the organic extractant is a mixture of a diester of an organic diol and a branched long-chain alcohol, in particular a mixture of 2,2,4-trimethyl-1,3-pentanediol diisobutyrate and 2-ethylhexanol.

8. The method as claimed in any one of claims 1 to 7, wherein the first water solution comprises from 0 to 100 g/L NaCl, preferably from 1 to 80 g/L NaCl, more preferably from 10 to 50 g/L NaCl.

9. The method as claimed in any one of claims 1 to 8, wherein the second water solution comprises from 0 to 100 g/L NaCl, preferably from 1 to 80 g/L NaCl, more preferably from 10 to 50 g/L NaCl.

10. The method as claimed in any one of claims 1 to 9, wherein gold is recovered from the final aqueous raffinate.

11. The method as claimed in claim 10, wherein gold is recovered by reduction.

12. The method as claimed in any one of claims 1 to 11, wherein the volume of the final aqueous raffinate is from 0.06 to 3% of the original PLS flow.

13. The method as claimed in any one of claims 1 to 12, wherein the first water solution comprises NaCl.

14. The method as claimed in any one of claims 1 to 13, wherein the second wash solution comprises NaCl.

## Patentansprüche

1. Verfahren zum Extrahieren von Gold aus Frischlauge (PLS), erhalten durch das Auslaugen von Gold, umfassend die Schritte:
(a) Extrahieren der PLS mit einem organischen Extraktionsmittel, umfassend einen organischen Diester und einen organischen langkettigen Alkohol, zum Gewinnen einer ersten organischen Phase, die Gold umfasst;
(b) Abstreifen von Gold aus der ersten organischen Phase mit einer ersten Wasser-Lösung zum Gewinnen eines ersten wässrigen Raffinats, das Gold umfasst, und einer ersten abgereicherten organischen Phase;
(c) Zufügen von HCl und NaCl in das erste wässrige Raffinat zum Erhöhen seines Säuregehalts bis mindestens 8 g/l und Chloridgehalts bis mindestens 30 g/l zum Gewinnen einer ersten wässrigen Lösung, die Gold umfasst;
(d) Extrahieren der ersten wässrigen Lösung mit einem organischen Extraktionsmittel, umfassend einen organischen Diester und einen organischen langkettigen Alkohol, zum Gewinnen einer zweiten organischen Phase, die Gold umfasst;
(e) Abstreifen von Gold aus der zweiten organischen Phase mit einer zweiten Wasser-Lösung zum Gewinnen eines zweiten wässrigen Raffinats, das Gold umfasst, und einer zweiten abgereicherten organischen Phase;
(f) gegebenenfalls Wiederholen der Schritte (c) bis (e) ein oder mehrere Male zum Gewinnen eines fertigen wässrigen Raffinats, das Gold umfasst.

2. Verfahren nach Anspruch 1, wobei Schritt (a) in einer oder mehreren, vorzugsweise mindestens zwei, bevorzugter von zwei bis drei, Stufen ausgeführt wird.

3. Verfahren nach Anspruch 1 oder 2, wobei Schritt (b) in einer oder mehreren, vorzugsweise mindestens zwei, bevorzugter von zwei bis vier, Stufen ausgeführt wird.

4. Verfahren nach einem der Ansprüche 1 bis 3, wobei in Extraktionsschritt (d) das gleiche organische Extraktionsmittel wie in Schritt (a) angewendet wird.

5. Verfahren nach einem der Ansprüche 1 bis 4, wobei Schritte (c) bis (e) mindestens einmal wiederholt werden.

6. Verfahren nach einem der Ansprüche 1 bis 5, wobei alle Extraktions- und Abstreif-Stufen im Gegenstrom verbunden sind.

7. Verfahren nach einem der Ansprüche 1 bis 6, wobei das organische Extraktionsmittel ein Gemisch von einem Diester von einem organischen Diol und einem verzweigten langkettigen Alkohol, insbesondere ein Gemisch von 2,2,4-Trimethyl-1,3-pentandioldi-isobutyrat und 2-Ethylhexanol, ist.

8. Verfahren nach einem der Ansprüche 1 bis 7, wobei die erste Wasser-Lösung von 0 bis 100 g/l NaCl, vorzugsweise von 1 bis 80 g/l NaCl, bevorzugter von 10 bis 50 g/l NaCl, umfasst.

9. Verfahren nach einem der Ansprüche 1 bis 8, wobei die zweite Wasser-Lösung von 0 bis 100 g/l NaCl, vorzugsweise von 1 bis 80 g/l NaCl, bevorzugter von 10 bis 50 g/l NaCl, umfasst.

10. Verfahren nach einem der Ansprüche 1 bis 9, wobei aus dem fertigen wässrigen Raffinat Gold gewonnen wird.

11. Verfahren nach Anspruch 10, wobei Gold durch Reduktion gewonnen wird.

12. Verfahren nach einem der Ansprüche 1 bis 11, wobei das Volumen von dem fertigen wässrigen Raffinat von 0,06 bis 3% von dem ursprünglichen PLS-Strom ist.

13. Verfahren nach einem der Ansprüche 1 bis 12, wobei die erste Wasser-Lösung NaCl umfasst.

14. Verfahren nach einem der Ansprüche 1 bis 13, wobei die zweite Waschlauge NaCl umfasst.

## Revendications

1. Procédé d'extraction d'or à partir d'une solution de lixiviation enrichie (PLS) obtenue par lixiviation de l'or, comprenant les étapes :
(a) d'extraction de la PLS avec un extracteur organique comprenant un diester organique et un alcool organique à longue chaîne pour obtenir une première phase organique comprenant de l'or ;
(b) de retrait de l'or de la première phase organique avec une première solution aqueuse pour obtenir un premier raffinat aqueux comprenant de l'or et une première phase organique appauvrie ;
(c) d'ajout de HCl et de NaCl dans le premier raffinat aqueux pour augmenter sa teneur en acide à au moins 8 g/L et sa teneur en chlorure à au moins 30 g/L pour obtenir une première solution aqueuse comprenant de l'or ;
(d) d'extraction de la première solution aqueuse avec un extracteur organique comprenant un diester organique et un alcool organique à longue chaîne pour obtenir une deuxième phase organique comprenant de l'or ;
(e) de retrait de l'or de la deuxième phase organique avec une deuxième solution aqueuse pour obtenir un deuxième raffinat aqueux comprenant de l'or et une deuxième phase organique appauvrie ;
(f) d'éventuellement répéter les étapes (c) à (e) une ou plusieurs fois pour obtenir un raffinat aqueux final comprenant de l'or.

2. Procédé selon la revendication 1, dans lequel l'étape (a) est réalisée en une ou plusieurs, de préférence au moins deux, plus préférablement de deux à trois, étapes.

3. Procédé selon la revendication 1 ou 2, dans lequel l'étape (b) est réalisée en une ou plusieurs, de préférence au moins deux, plus préférablement de deux à quatre, étapes.

4. Procédé selon l'une quelconque des revendications 1 à 3, dans lequel dans l'étape d'extraction (d), le même extracteur organique est utilisé que dans l'étape (a).

5. Procédé selon l'une quelconque des revendications 1 à 4, dans lequel les étapes (c) à (e) sont répétées au moins une fois.

6. Procédé selon l'une quelconque des revendications 1 à 5, dans lequel toutes les étapes d'extraction et de retrait sont connectées en tant que flux à contre-courant.

7. Procédé selon l'une quelconque des revendications 1 à 6, dans lequel l'extracteur organique est un mélange d'un diester d'un diol organique et d'un alcool ramifié à longue chaîne, en particulier un mélange de 2,2,4-triméthyl-1,3-pentanediol de diisobutyrate et de 2-éthylhexanol.

8. Procédé selon l'une quelconque des revendications 1 à 7, dans lequel la première solution aqueuse comprend de 0 à 100 g/L de NaCl, de préférence de 1 à 80 g/L de NaCl, plus préférablement de 10 à 50 g/L de NaCl.

9. Procédé selon l'une quelconque des revendications 1 à 8, dans lequel la deuxième solution aqueuse comprend de 0 à 100 g/L de NaCl, de préférence de 1 à 80 g/L de NaCl, plus préférablement de 10 à 50 g/L de NaCl.

10. Procédé selon l'une quelconque des revendications 1 à 9, dans lequel l'or est récupéré du raffinat aqueux final.

11. Procédé selon la revendication 10, dans lequel l'or est récupéré par réduction.

12. Procédé selon l'une quelconque des revendications 1 à 11, dans lequel le volume du raffinat aqueux final est de 0,06 et 3% de l'écoulement initial de la PLS.

13. Procédé selon l'une quelconque des revendications 1 à 12, dans lequel la première solution aqueuse comprend du NaCl.

14. Procédé selon l'une quelconque des revendications 1 à 13, dans lequel la deuxième solution de lavage comprend du NaCl.
